Europäisches Patentamt

European Patent Office

Office européen des brevets

(11) Publication number : **0 439 311 A1**

# (12) EUROPEAN PATENT APPLICATION

(21) Application number : 91300441.2

(22) Date of filing : 21.01.91

(51) Int. Cl.⁵ : **B61D 3/18, B61D 3/12,
B61F 3/12, B60F 1/04,
B61G 5/02**

(30) Priority : 22.01.90 GB 9001435

(43) Date of publication of application :
**31.07.91 Bulletin 91/31**

(84) Designated Contracting States :
**AT BE CH DE DK ES FR GB GR IT LI LU NL SE**

(71) Applicant : **TRAILER TRAIN LIMITED
Alliance House 12 Caxton Street
London SW1H 0QS (GB)**

(72) Inventor : **Ellis, Bruce Richard
1 Uplands Park
Sheringham, Norfolk NR26 8NE (GB)**

(74) Representative : **Allam, Peter Clerk et al
LLOYD WISE, TREGEAR & CO. Norman House
105-109 Strand
London WC2R 0AE (GB)**

(54) **Road/rail transport system and units therefor.**

(57) A road rail system is described which comprises a plurality of semi-trailers (1) each comprising a body member and, where required, wheels for supporting the trailing end of a semi-trailer (1) during use in a road mode, and connecting means at the leading end of a semi-trailer (1) for connecting the semi-trailer (1) to a tractor unit, and a plurality of bogies (2), each bogie (2) comprising at least two axles, bogie wheels mounted on the axles and a central bogie bolster arranged transverse to the intended direction of travel. There is an intermediate bolster (3) for the bogie (2) with four main mounting points, a first two of which lie in the intended direction of travel of the intermediate bolster (3) and the second two of which lie transverse thereto, three of the mounting points being for connection to one semi-trailer (1) and the other lying at the trailing end of said second mounting point for connection to an adjacent semi-trailer (1). The first two mounting points include bifurcated tongues (12) (13) and apertured blocks on the semi-trailer, the blocks being held by pins (16) operated by piston and cylinder arrangements, the second two mounting points including apertured blocks on the semi-trailer (1) and pins (21) on the intermediate bolster (3). This arrangement makes the semi-trailer (1) lighter and cheaper than previous ones.

Fig.1.

EP 0 439 311 A1

# ROAD/RAIL TRANSPORT SYSTEM AND UNITS THEREFOR

This invention relates to a road/rail transport system including rail bogies and semi-trailers (as hereinafter defined) which can be used with the rail bogies in a rail mode and with road wheels in a road mode.

The term "semi-trailer" is usually intended to denote any vehicle having road wheels at its trailing end and adapted for connection at its leading end to a tractor unit. Such a vehicle may be in the form of a container box, a tank, a flat bed truck or even a passenger carriage. However, the term "semi-trailer" is additionally used herein to denote a carrying unit devoid of road wheels and usable in a rail mode of operation. Such a unit may be in the form of a container-box, a tank, a flat bed unit, adapted to carry containers or other items which can be loaded onto and unloaded from the unit by cranes, derricks or other lifting means at a depot, or even in the form of a passenger carriage.

For economic, commercial and environmental reasons, there is a growing need for maximum flexibility of freight transport as between road and rail. In order to satisfy this need, a very wide variety of transport systems has been proposed, However, although some of the systems were proposed more than fifty years ago, none of the proposed systems has been entirely satisfactory and none has become established on a wide scale in practice.

In some of these previously proposed systems, a trailer or semi-trailer is fitted with wheels for both rail and road travel ; see, for example, US-P 2 066 836 and US-P 4 202 276. Such a system has the disadvantage that in one transport mode the wheels for the other transport mode are redundant and, particularly in the road mode, reduce the payload.

In other previously proposed systems, semi-trailers are cradled in special trucks ; see, for example, US-P 4 574 707 and US-P 4 452 147. However, such a system effectively amounts to no more than carrying a semi-trailer by rail as any other freight.

In yet other previously proposed systems, semi-trailers are mounted on bogies. In these systems a semi-trailer may be mounted on one or two bogies ; see, for example, US-P 2 513 552 and US-P 3 675 592 or the semi-trailers may be mounted at their ends separately on a bogie, see for example, US-P 4 385 857 and US-P 4 547 107 or the semi-trailers may have a common mounting on a bogie or the semi-trailers may be connected together and their connection may have a common mounting on a bogie, see for example, US-P 2 963 986, US-P 4 669 391 and US-P 4 773 336.

One of the main problems with the latter systems is that in order to mount the semi-trailers on the bogies and in order to ensure that the system can cope with the buff and draft loads in the rail mode, considerable and expensive modifications have to be made to the semi-trailers. Since the semi-trailers are the most numerous items of the system, the system tends to become economically unattractive.

US-P 4 773 336 and EP-A 0 143 614 describe a road and rail transport system, comprising a plurality of semi-trailers, each semi-trailer comprising a body member, road wheels fixed to said body member at or near the trailing end thereof for supporting the semi-trailer during use in a road mode, and connecting means at the leading end of the semi-trailer for connecting the semi-trailer to a tractor unit, a plurality of bogies, each bogie comprising at least two axles, bogie wheels mounted on the axles, a frame supporting said axles, and coupling means for coupling a semi-trailer to a bogie, the arrangement being such that trains of bogies and semi-trailers can be readily assembled so that each bogie effectively supports the weight of one semi-trailer, the bogies always being used in a rail mode but the semi-trailers being demountable from the bogies and used independently in a road mode, characterised in that each bogie has a central bogie bolster arranged between the axles and transverse to the intended direction of travel, a pocket formed in the central bogie bolster of the bogie and a mounting member held in the pocket to permit limited movement of the mounting member relative to the pocket, there being a substantially planar covering surface to said mounting member to prevent ingress of dirt and moisture into said pocket from above, and there being on said covering surface of said mounting member an upstanding member formed with an aperture or groove and constituting a first part of quick-release coupling means for connecting the trailing end of a semi-trailer to a bogie, and in that each semi-trailer has at each end a body bolster, the body bolster at the trailing end comprising a locking member for reception by said aperture or groove and constituting a second part of said quick-release coupling means for coupling a semi-trailer to a bogie, there being additional coupling means associated with each body bolster whereby a leading end of one semi-trailer can be releasably coupled to the trailing end of another semi-trailer, such that the load of a first semi-trailer is transmitted to the bogie of a second adjacent semi-trailer via the additional coupling means and the mounting of the second semi-trailer on the bogie.

It is an object of the present invention to improve upon the transport system just described and to provide a transport system in which the semi-trailers are considerably cheaper than those required in the above described transport system.

According to the present invention there is provided a road and rail transport system comprising a plurality of semi-trailers, each semi-trailer comprising a body member, and, optionally, road wheels for supporting the trailing end of the semi-trailer during use in a road mode, and connecting means at the leading end of the semi-trailer for connecting the semi-trailer to a tractor unit, and a plurality of bogies, each bogie comprising at least two axles, bogie wheels mounted on the axles, a frame supporting said axles, a central bogie bolster arranged transverse to the intended direction of travel, characterised in that the system also comprises a plurality of intermediate bolsters, each such bolster being adapted for mounting on a respective bogie bolster, and means for connecting the intermediate bolster to the leading end of one semi-trailer and to the trailing end of another.

In one type of bogie which may form part of the present transport system, a pocket is formed in the central bogie bolster to receive a mounting member which can be held in the pocket to permit limited movement of the mounting member relative to the pocket and which can be attached to or form part of the intermediate bolster. However, other types of bogie may be employed.

The invention also resides in an intermediate bolster itself.

The intermediate bolster in a most preferred form will have four mounting points by which it can be connected to a semi-trailer, three mounting points being for connection to one semi-trailer and the other mounting point being for connection to an adjacent semi-trailer. The intermediate bolster is shaped to encompass these four mounting points and, accordingly, may be kite-shaped or rhombus-shaped, but it is conveniently of cruciform shape with one arm extending in the direction of travel and the other arm transverse thereto. At each end of said one arm is means for connecting the intermediate bolster to the respective semi-trailer, such means preferably comprising a bifurcated end within which an apertured tongue mounted on the semi-trailer can be held captive by a pin. At each end of the other arm of the bolster, there is provided a pin or the like for engaging with the trailing end of a semi-trailer so as to provide, together with bifurcated end of the one arm, a three point connection to the trailing end of a semi-trailer.

By the use of such an intermediate bolster, a clear division between the road and rail modes of operation can be obtained and the semi-trailers can be made more cheaply and can be made to accept a higher payload than with some previously proposed systems.

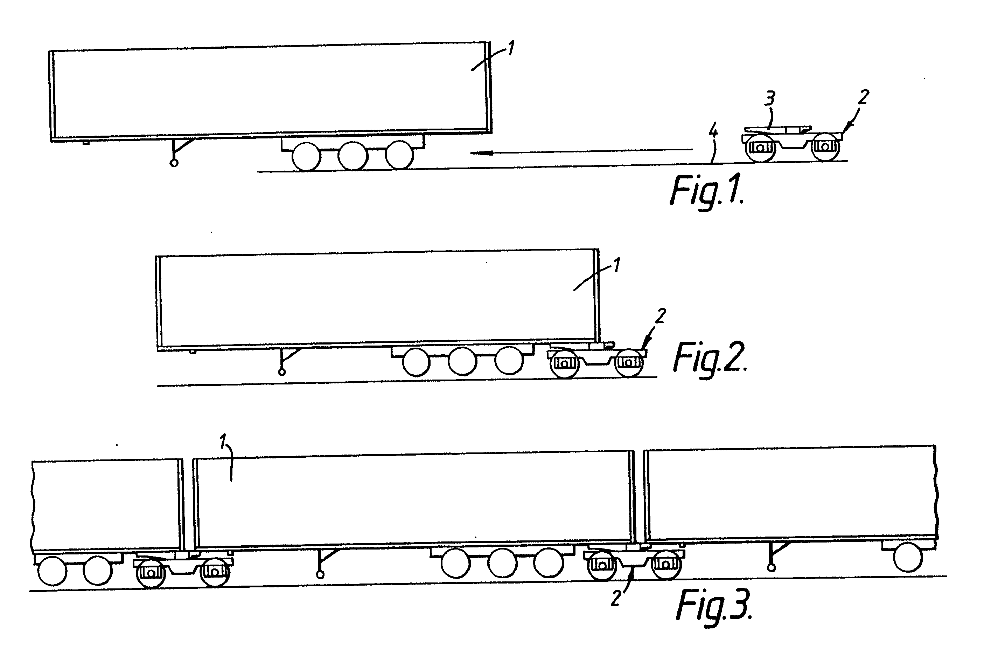

In order to enable the invention to be more readily understood reference will now be made to the accompanying drawings, which illustrate diagrammatically and by way of example an embodiment thereof, and in which Figure 1 is a sketch showing a semi-trailer about to be mounted on a bogie,

Figure 2 is a sketch showing the semi-trailer mounted on the bogie,

Figure 3 is a sketch showing a train formed from a plurality of semi-trailers and bogies,

Figure 4 is a top plan view of an intermediate bolster,

Figure 5 is a longitudinal section through the bolster shown in Figure 4 when connected up to semi-trailers,

Figure 6 is an end view of part of a semi-trailer and the intermediate bolster,

Figure 7 is an end view of part of an intermediate bolster,

Figure 8 is a section on the line VIII-VIII of Figure 7,

Figure 9 is a section on the line IX-IX of Figure 10,

Figure 10 is a section on the line X-X of Figure 9 showing another part of an intermediate bolster, and

Figures 11, 12 and 13 are sketches similar to Figures 1 and 2 showing the mounting of a semi-trailer on a bogie in a modification of the present transport system.

Referring now to Figure 1 there is shown a semi-trailer 1 which is to be mounted on a bogie 2 and then connected to similar semi-trailers to form a train. The bogie 2 has an intermediate bolster 3 mounted on it in a manner to be described and the bolsters 3 serve for effecting connections between the semi-trailers and the bogies.

Before describing the intermediate bolster and other parts of the present transport system in greater detail, the manner in which the bogies and semi-trailers are coupled to form trains for use in a rail mode and how the trains are uncoupled to present the semi-trailers for use in a road mode will now be described.

Referring firstly to Figure 1, the bogie 2, which carries the intermediate bolster 3, is mounted so as to be freely movable on a railway track 4. The semi-trailer 1 is first positioned so as to lie symmetrically above the rails of the track 4 with its longitudinal axis over the centre line of the rack. The height of the semi-trailer body above the rail track is then adjusted by using the road suspension of the semi-trailer which suspension may be operated pneumatically or hydraulically, or may be operated by mechanical means. The bogie 2 is then moved towards the semi-trailer 1 or the semi-trailer is moved towards the bogie whereupon the bogie and semi-trailer are locked together in a manner to be described. The road wheels of the semi-trailer are then retracted and the semi-trailer is now in the position shown in Figure 2 with the semi-trailer connected to the bogie by means of the intermediate bolster 3. The semi-trailer can be moved towards the leading end of a second semi-trailer the trailing end of which is already mounted on a bogie by an intermediate bolster. The vertical height of the second semi-trailer can be adjusted to a required value by adjusting the landing legs fitted to it or by some external means such as jacks. When the vertical adjustment is correct the first trailer is moved so that the trailing end of its intermediate bolster can be locked in a manner to be described to the leading end of the second semi-trailer. Eventually a train of semi-trailers can be built up as shown in Figure 3. In this specification, the terms "leading" and "trailing" as applied to a semi-trailer or other item refer to the end of a semi-trailer which is leading or trailing during normal forward movement of the semi-trailer in the road mode. It is however to be appreciated that a train of semi-trailers as shown in Figure 3 can be moved in either direction.

In order to return the semi-trailers to a road mode, the individual semi-trailers of the train are decoupled. The road wheels of an individual semi-trailer are then lowered to engage the ground and support the weight of the semi-trailer and the bogie and intermediate bolster are disconnected from the semi-trailer. The semi-trailer body is then raised on the road suspension to permit the bogie to be withdrawn. The road suspension is then set to the correct ride position and the semi-trailer can be driven away.

In the above discussion, no reference has been made to a conventional tractor unit which is required to move the semi-trailer. The presence of such a tractor unit, when necessary, and the operation and use thereof to move the semi-trailer will be well understood.

The various items of the present transport system will now be described in greater detail, together with the means whereby the individual items of the system can be connected one to another.

The rail bogie 2 is a conventional bogie and is conveniently one with a substantially H-shaped frame, two axles and two pairs of rail wheels on which the frame is mounted by conventional multi-stage springs designed to cope with variable loads. The H-frame has a transverse box section or bogie bolster the upper surface of which is formed with a part spherical pocket in which a part spherical mounting member is held so as to be universally rockable about a mounting pin. The intermediate bolster 3 is mounted so as to be fast with the part spherical mounting member and is thus mounted on the bogie in a manner similar to that in which a rail truck is mounted on a bogie.

Likewise in conventional manner, the bogie carries spring-loaded pads with built-in roll stops which are positioned on the bogie bolster to act as side bearers and which engage corresponding rubbing strips on the underside of the intermediate bolster. These spring-loaded pads serve to control body roll and bogie rotation in conventional manner.

The bogie also carries brake means and means for connecting brake actuators provided on the bogie with the train's air line. The connection and continuity of these brake means and pipes may be effected using any conventional or non-conventional couplings or devices.

In view of the conventional nature of the bogie it is not illustrated but it will be appreciated that instead of a conventional two axle bogie, a three axle bogie could be used. Furthermore, while it is conventional in British and European rail practice that the aforesaid mounting member in the pocket in the bogie is of hemispherical shape, a mounting member of disc shape is more usual in United States rail practice, and accordingly, the bogie of the present system may incorporate or be adapted to receive a disc-shaped mounting member. Instead of using bogies which incorporate or are adapted to receive the aforesaid hemispherical or disc-shaped mounting members, it is possible to use a bogie in which the load is transferred from the intermediate bolster to the bogie through more than one form of suspension and in which the ride performance of the bogie may be controlled by a series of dampers or ties in the vertical and horizontal planes.

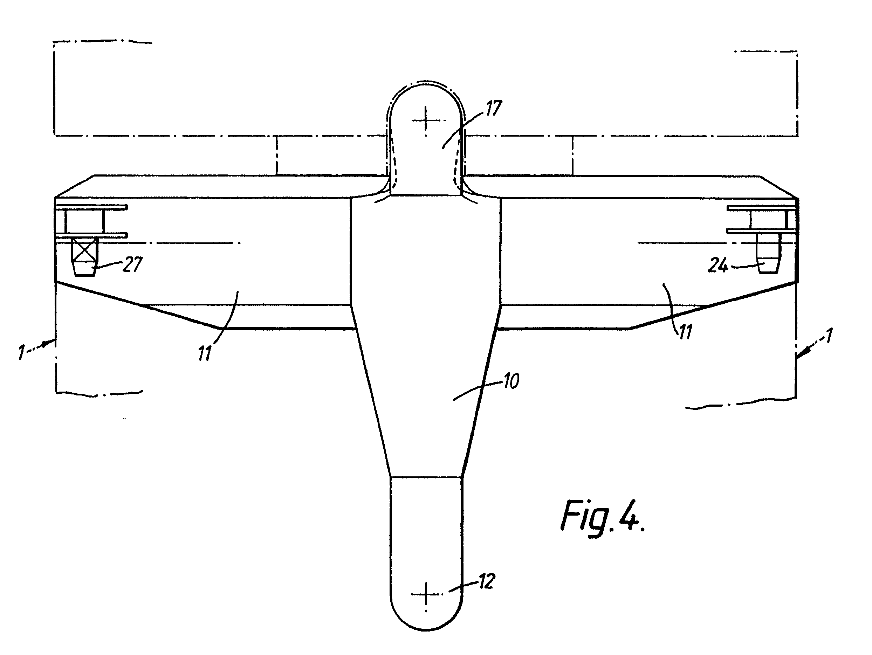

The intermediate bolster is shown in greater detail in Figures 4 to 6 and constitutes means for establishing a connection between a semi-trailer and a bogie. As shown in Figure 4, the intermediate bolster is a framework which, in plan view, is of substantially cruciform shape. The framework forms a first main member 10 which lies in the direction of motion of the train and a second main member 11 which lies transverse to the direction of motion. The intermediate bolster is mounted on the bogie in a manner not shown, with the vertical axis of a part-spherical mounting member passing substantially through the centre of intersection of the two main members 10 and 11. It is also mounted so that rubbing strips (not shown) mounted on the undersides of the main member 11 engage the side bearers on the central bogie bolster.

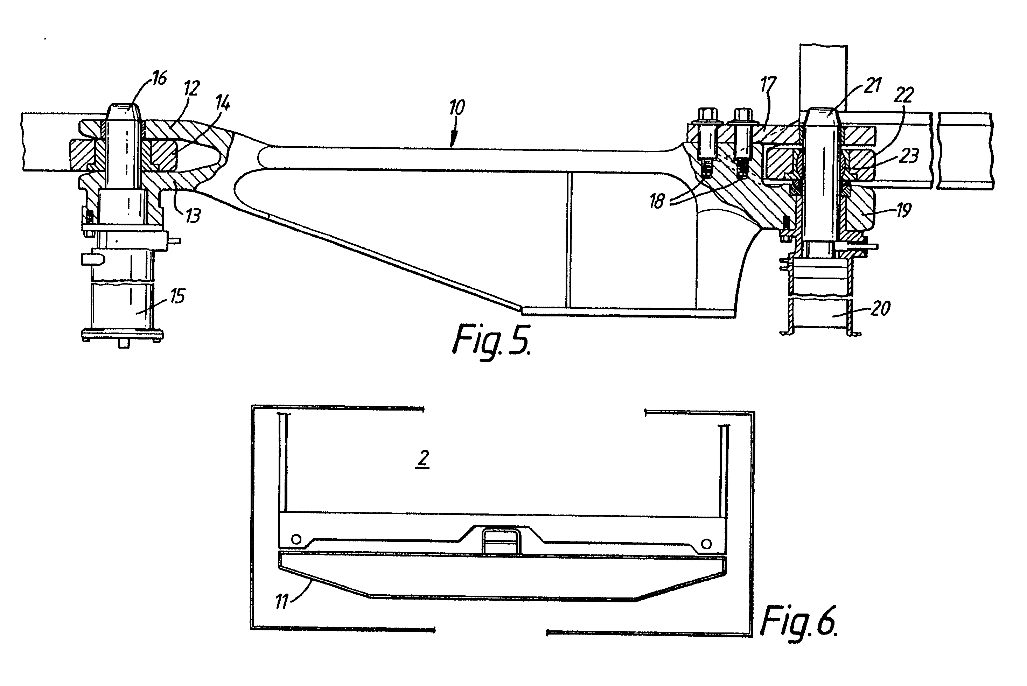

The leading end of the member 10 is bifurcated as shown in Figure 5 with the tongues 12 and 13 of the fork lying one above the other for receiving between them a tongue 14 built into the rear of a semi-trailer. A piston and cylinder arrangement 15 is mounted below the lower tongue 13 and may be actuated pneumatically or hydraulically to move a pin 16 in a vertical direction to pass through registering holes in the tongues 12, 13 and 14 so as to lock the semi-trailer to the intermediate bolster 3. The end of the pin 16 is slightly tapered so that it can enter the hole in the tongue 14 even if it is not in exact register with the holes in the tongues 12 and 13. Alternatively, mechanical means in the form of rods and levers could be provided to move the pin 16 by manual operation, in which case, of course, the piston and cylinder arrangement 15 is replaced by an appropriate mounting for the pin.

The trailing end of the member 10 is also effectively bifurcated, an upper plate 17 being secured by bolts 18 to a lower tongue 19 forming part of the member 10. Attached below the tongue 19 is a piston and cylinder arrangement 20, similar to the arrangement 15, for moving a pin 21 in a vertical direction through registering holes in the tongue 19 and plate 17 and through a registering hold in a tongue 22 mounted at the leading end of a semi-trailer. The tongue 22 is fitted with an apertured ball joint 23 which permits limited movement of the tongue 22 about the pin 21 in any direction so as to allow adjacent semi-trailers in a train to pitch, roll and yaw with respect to each other.

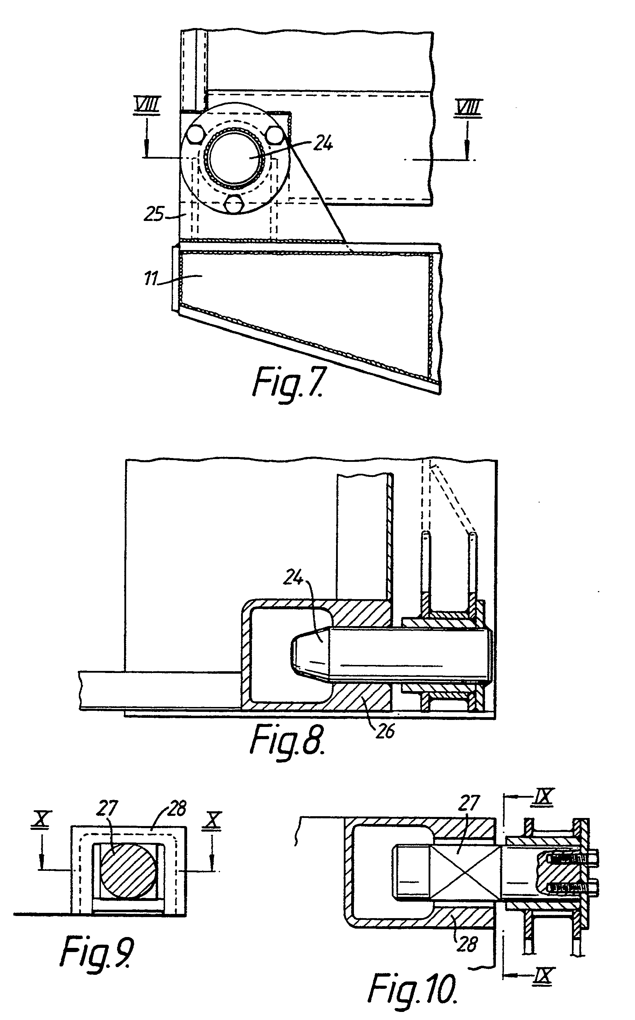

Further connections between the intermediate bolster 3 and the semi-trailer carrying the tongue 14 are provided at the ends of the second main member 11 of the bolster, and these connections are shown in Figures 7 to 10. Referring now to Figures 7 and 8, there is shown the coupling between the right hand (with reference to Figure 4) end of the member 11 and the semi-trailer. The coupling comprises a pin 24 secured in a mounting 25, the pin being intended to engage in an aperture in a locating block 26 secured at the trailing end of a semi-trailer 1, the position of which is indicated in broken lines in Figure 4. The pin 24 is of circular cross-section and is tapered at its end.

Figures 9 and 10 show the coupling at the left hand end of the member 11 where a similar coupling is made but using a pin 27 of partially circular cross-section and having flats for entry into a locating block 28 secured at the trailing end of the semi-trailer. The presence of the flats makes it easier to insert the two pins 24 and 27 in their respective locating blocks 26 and 28 by providing substantial tolerances in the horizontal direction for alignment. When the pins are correctly engaged then the pin 27 will only transmit load in a vertical direction, while the pin 24 can transmit loads in both vertical and transverse directions.

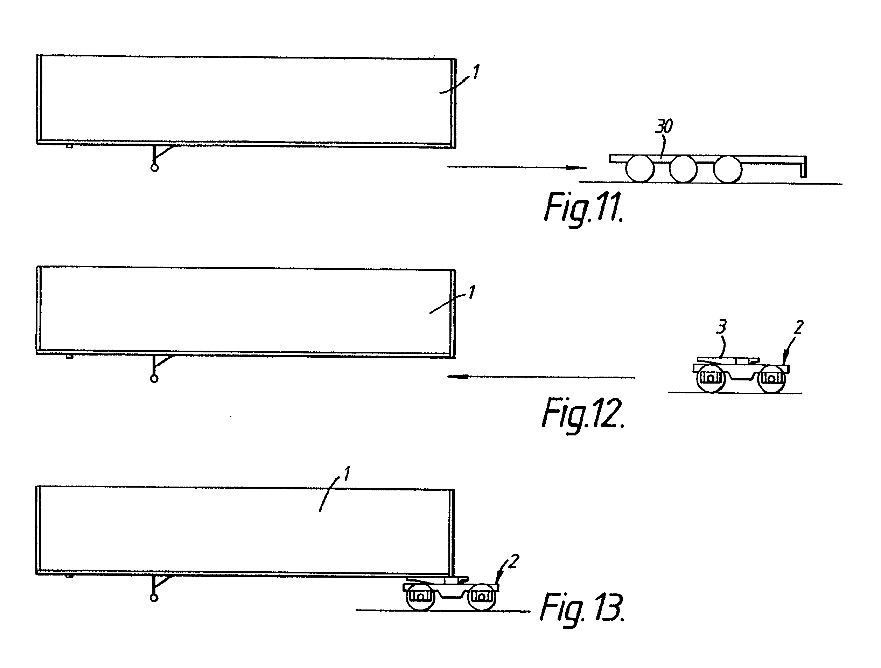

Referring now to Figures 11 to 13 of the drawings, there is shown a modification of the present transport system in which the road wheels of the semi-trailer 1 are demountable as a unit so that the system comprises not only semi-trailers 1, rail bogies 2 and intermediate bolsters 3 but also road bogies 30. In the operation of the system, the semi-trailer is, as before, positioned above the rail track 4 and the trailing end is supported by external means such as jacks or even fork lift trucks. The road bogie 30 is then disconnected and wheeled away as shown in Figure 11. The rail bogie 2, on which the intermediate bolster 3 is mounted, is then positioned beneath the trailing end of the semi-trailer and connected thereto in the manner described above. The manner in which the road bogie 30 is connected to the semi-trailer is not described in detail but any suitable form of connection may be employed.

The semi-trailers used in the transport system of the present invention may be any form of conventional or non-conventional semi-trailer. All that is required to adapt a semi-trailer to use in the present transport system is the provision of the tongues 14 and 22 and the locating blocks 26 and 28.

In order that a train of semi-trailers in accordance with the present transport system can interface with conventional rail vehicles, it may be necessary to provide leading and trailing adapters. A leading adaptor will have a connection to engage a tongue 22 at the leading end of a semi-trailer as well as a connection to the underside of the conventional pick-up-plate of the semi-trailer so as to provide lateral stability. The leading adapter will also have drawgear or other suitable means for interfacing with conventional rail vehicles.

In similar manner a trailing adapter has connections to engage a tongue 14 and locating blocks 36 and 28 at the trailing end of a semi-trailer as well as drawgear or other suitable means for interfacing with conventional rail vehicles.

Both the leading and trailing adapters are mountable on bogies in a manner similar to that in which the intermediate bolster is mounted on a bogie and both adapters and bolsters have provision (not shown) for the mounting of rail brake equipment and to provide connections to and continuity of rail brake pipes.

Each semi-trailer has a train brake pipe concealed in the frame and the brake pipe can be connected by snap connectors at each end with the rail brake pipes or the intermediate bolsters and/or adapters. Thus with the present transport system all the brake control equipment for the rail mode of transport is effectively contained in the intermediate bolster.

The present transport system is simple to operate and maintains a clear division between the road and rail modes of operation. Because substantially all the equipment required for operation in a rail mode is carried by the intermediate bolster, the payload for the road mode can be a maximum.

The intermediate bolster is connected to the bogie by a well established form of connection which permits considerable movement between the two during rail travel, and the intermediate bolster is connected to the trailing end of a semi-trailer by a three-point connection which provides great stability and to the leading end by a single point connection which can be located vertically under a bulkhead of the semi-trailer.

As compared with, for example, the semi-trailers required in the transport system described in EP-A 0 143 614, the semi-trailers required in the present transport system can be made lighter and cheaper. Indeed, since the present trailers do not carry tongue and socket couplings and since they do not have to be reinforced in the same manner to withstand static and dynamic loads, the present semi-trailers can be up to 25% cheaper to manufacture than those required in the previously described system.

Further advantages provided by the system shown in Figures 11 to 13 include the features that the road suspension for the semi-trailer can be lighter and cheaper as it is not required to raise the semi-trailer to permit it to enter the rail mode. Furthermore, no means is required for holding road wheels in an elevated position when the semi-trailer is in the rail mode and since the semi-trailer is much lighter there is potential for higher speeds in the rail mode.

## Claims

1. A road and rail transport system comprising a plurality of semi-trailers, each semi-trailer comprising a body member, and, optionally, road wheels for supporting the trailing end of the semi-trailer during use in a road mode, and connecting means at the leading end of the semi-trailer for connecting the semi-trailer to a tractor unit, and a plurality of bogies, each bogie comprising at least two axles, bogie wheels mounted on the axles, a frame supporting said axles, a central bogie bolster arranged transverse to the intended direction of travel, characterised in that the system also comprises a plurality of intermediate bolsters, each such bolster being adapted for mounting on a respective bogie bolster, and means for connecting the intermediate bolster to the leading end of one semi-trailer and to the trailing end of another.

2. A system as claimed in Claim 1, wherein the intermediate bolster has four main mounting points by which it can be connected to a semi-trailer, three mounting points being for connection to one semi-trailer and the other mounting point being for connection to an adjacent semi-trailer.

3. A system as claimed in Claim 2, wherein the intermediate bolster encompasses said four main mounting points and may be kite-shaped, rhombus-shaped or cruciform with one arm extending in the intended direction of travel and the other arm extending transverse thereto.

4. A system as claimed in Claim 3, wherein at each end of said one arm means is provided for connecting the intermediate bolster to a respective semi-trailer, said means comprising a bifurcated or effectively bifurcated end within which an aperture tongue mounted on the semi-trailer can be held captive by a pin, each of which is preferably slightly tapered and is operated by a piston and cylinder arrangement.

5. A system as claimed in Claim 3 or 4, wherein a pin or the like is provided at each end of the other arm of the intermediate bolster for engaging with the trailing end of a semi-trailer so as to provide, together with the bifurcated end of the one arm of the intermediate bolster, a three point connection to the trailing end of a semi-trailer.

6. A system as claimed in any preceding claim, wherein the semi-trailer is provided with means for adjusting its height relative to the ground, such as landing legs or jacks.

7. A system as claimed in Claim 5, wherein the pin at each end of said other arm of the intermediate bolster engages in an aperture in a locating block secured at the trailing end of a semi-trailer, one pin being tapered and the other being formed with flats to facilitate entry of the pin into its block and for providing tolerance in a horizontal direction.

8. A system as claimed in any preceding claim, wherein leading and trailing adapters are provided for interfacing with conventional rail vehicles.

9. A bogie for a road and rail transport system as claimed in any preceding claim, wherein the bogies comprises at least two axles and a central bogie bolster arranged transverse to the intended direction of travel, characterised in that the bogie also comprises an intermediate bolster connectable to the leading end of one semi-trailer and to the trailing end of another, the intermediate bolster having four main mounting points two of which lie in the intended direction of travel of the intermediate bolster and the other two of which lie transverse thereto, three of said mounting points being for connecting to one semi-trailer and the other mounting point lying at the trailing end of said two mounting points being for connection to an adjacent semi-trailer.

Fig.1.

Fig.2.

Fig.3.

EP 0 439 311 A1

Fig.4.

EP 0 439 311 A1

Fig. 5.

Fig. 6.

EP 0 439 311 A1

Fig.7.

Fig.8.

Fig.9.

Fig.10.

Fig.11.

Fig.12.

Fig.13.

**European Patent Office**

## EUROPEAN SEARCH REPORT

Application Number

EP 91 30 0441

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0328852 (FERROSUD S. P. A.)<br>* column 3, line 53 - column 6, line 14; figures 1-11 * | 1, 9 | B61D3/18<br>B61D3/12<br>B61F3/12<br>B60F1/04<br>B61G5/02 |
| A | | 6 | |
| X | GB-A-2168020 (RAILMASTER SYSTEM INC.)<br>* page 1, line 100 - page 2, line 76; figures 3-9 * | 1, 9 | |
| X | EP-A-0241099 (B. V. ALPHA ENGINEERING INGENIEURS- EN PROJECTENBUREAU)<br>* claims 1-3; figures 1-6 * | 1, 9 | |
| A | DE-A-3731584 (H. SANDER)<br>* column 3, lines 29 - 35; claims 6, 7; figures 9, 10 * | 1, 2, 6, 8, 9 | |

**TECHNICAL FIELDS SEARCHED (Int. Cl.5)**

B61D
B61F
B60F
B61G
B61J
B62D

The present search report has been drawn up for all claims

| Place of search | Date of completion of the search | Examiner |
|---|---|---|
| THE HAGUE | 18 APRIL 1991 | CHLOSTA P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

12